# EUROPÄISCHE PATENTSCHRIFT

(11) **EP 2 016 222 B1**
(45) Veröffentlichungstag und Bekanntmachung des Hinweises auf die Patenterteilung: **03.05.2017**
(21) Anmeldenummer: 07718436.4
(22) Anmeldetag: 09.05.2007
(51) Int. Cl.: D21C 1/02, D21C 3/02, D21C 9/00

(54) **VERFAHREN ZUR HERSTELLUNG EINES ZELLSTOFFES**
METHOD FOR PRODUCING A TYPE OF PULP
PROCÉDÉ DE FABRICATION D'UNE PÂTE DE CELLULOSE

(30) Priorität: 10.05.2006 AT 8072006
(43) Veröffentlichungstag der Anmeldung: 21.01.2009
(60) Teilanmeldung: 11177342.0
(73) Patentinhaber: LENZING AKTIENGESELLSCHAFT, 4860 Lenzing (AT)
(72) Erfinder: SIXTA, Herbert, A-4860 Lenzing (AT); PROMBERGER, Andrea, A-4901 Ottnang (AT); BORGARDS, Andrea, A-4863 Steinbach (AT); MÖSLINGER, Roland, A-4842 Zell am Pettenfirst (AT)
(74) Vertreter: Nemec, Harald
(86) Internationale Anmeldenummer: PCT/AT2007/000224
(87) Internationale Veröffentlichungsnummer: WO 2007/128026

(56) Entgegenhaltungen:
- WO-A-01/88236
- WO-A-95/00698
- WO-A-95/20066
- WO-A-03/025280
- WO-A-03/080924
- US-A- 6 086 712
- US-A1- 2002 096 276
- US-A1- 2004 020 854
- US-A1- 2005 203 291
- US-B1- 6 210 801

## Beschreibung

Die vorliegende Erfindung betrifft ein Verfahren zur Herstellung eines Zellstoffes aus einem cellulosischen Ausgangsmaterial mittels des Kraft-Verfahrens.

Insbesondere betrifft die Erfindung ein Verfahren zur Herstellung eines Hochausbeute-Zellstoffes, welcher sich zur Weiterverarbeitung zu Viskosefasern und Lyocellfasern eignet.

Chemiezellstoffe werden überwiegend zu cellulosischen Fasern nach dem Viskose- und Lyocellverfahren weiterverarbeitet. Während der letzten Jahre hat sich die Kostenposition der Regeneratfasern gegenüber den konkurrierenden synthetischen Fasern weiter verschlechtert. Eine Verringerung der Zellstoffkosten, die den bedeutendsten Kostenfaktor darstellen, würde die Kostenposition von Regeneratfasern deutlich verbessern.

*Luo et al.* konnten zeigen, dass konventioneller Kraftzellstoff nach Anpassung des Durchschnittspolymerisationsgrades (DP) mittels säurehydrolytischem bzw. oxidativem Abbau zur Herstellung cellulosischer Fasern nach dem Lyocellverfahren geeignet ist [WO 99/47733]. Die gemäß diesem Stand der Technik hergestellten Kraftzellstoffe weisen einen Gehalt an Hemicellulose von zumindest 7% Gew.% auf. Lyocellfasern, die aus diesen Kraftzellstoffen hergestellt werden, weisen gemäß WO 99/47733 einen Hemicellulosegehalt von zumindest 5 Gew.% bis 27 Gew.% auf. Die zur Bestimmung des Hemicellulosegehaltes verwendete Messmethode wird jedoch nicht geoffenbart.

Nachteilig wirkt sich jedoch die Anwesenheit niedermolekularer Hemicellulosenkomponenten auf das Prozessverhalten (Anreicherung nicht faserbildender Hemicellulosenanteile im Spinnbad; hoher Chemikalienaufwand für die Depolymerisation zur Einstellung des gewünschten DPs) und die textilmechanischen Eigenschaften (mehr als 5 cN/tex niedrigere Festigkeit unter konditionierten Bedingungen im Vergleich zu Lyocellfasern aus Vorhydrolyse-Kraftzellstoffen) der daraus hergestellten Lyocellfasern aus.

Seit der Entwicklung der "modifizierten Kraftkochung" zu Beginn der 1980er Jahre weiß man, dass die Absenkung der gelösten Holzinhaltsstoffkonzentration in der Endphase der Kochung eine deutliche Effizienz- und Selektivitätsteigerung bewirkt.

Um dieser Kenntnis zu entsprechen wurde vorgeschlagen, hemicellulosereiche Ablaugeströme, wie sie etwa nach Beendigung der Gleichstromkochphase bei kontinuierlichen Kochverfahren (z.B.: MCC, EMCC) auftreten, dem Kochprozess zu entziehen, um sicherzustellen, dass das Konzentrationsniveau der gelösten Hemicellulosen in der weiteren Kochphase auf Werte kleiner als 10 g/l absinkt [WO 95/00698]. In einem weiteren Schritt werden die hochmolekularen Hemicellulosen mittels druckgetriebener Membrantrennverfahren weiter konzentriert, ehe sie in der Nachbleiche im Rahmen einer E-Stufe auf der Oberfläche der Zellstofffasern wiederausgefällt werden, um einerseits die Ausbeute zu erhöhen und andererseits die statische Festigkeit zu erhöhen.

Dieser Vorschlag bewirkt zwar eine verbesserte Zellstoffausbeute, der Nachteil besteht aber darin, dass der nicht adsorbierte Anteil der Hemicellulosen (Gleichgewichtsreaktion) sich unweigerlich im Bleichfiltrat anreichert, erhöhte Bleichchemikalienverbräuche verursacht und ein Teil auch ins Abwasser gelangt.

Die US 2002/0096276 A1 beschreibt eine Kalt-Alkaliextraktion an einem gebleichten, mittels einem Vorhydrolyse-Kraftverfahrens hergestellten Zellstoffes.

Die vorliegende Erfindung stellt sich zur Aufgabe, ein Verfahren zur Herstellung von Zellstoff zur Verfügung zu stellen, welches in verbesserter Weise die eingangs geschilderten Probleme der Zellstofferzeugung nach dem Kraft-Verfahren löst.

Diese Aufgabe wird mit einem Verfahren zur Herstellung eines Chemiezellstoffes aus einem cellulosischen Ausgangsmaterial mittels des Kraft-Verfahrens, umfassend den Schritt des Kochens des Ausgangsmaterials mit einer Kochlauge, gelöst, welches dadurch gekennzeichnet ist, dass das Ausgangsmaterial vor der Kochung einer Dampfbehandlung ausgesetzt wird und dass der durch die Kochung erhaltene Zellstoff im Zuge der Weiterbehandlung einer Kalt-Alkali-Extraktion (CCE) unterworfen wird, wobei die Dampfbehandlung bei einer Temperatur von 120°C oder mehr und einem P-Faktor von 50 oder weniger durchgeführt wird und wobei für die Berechnung des P-Faktors eine Aktivierungsenergie von 123 kJ/mol eingesetzt wird.

Es hat sich gezeigt, dass bei einer Kombination der Massnahmen einer Dampfbehandlung des Ausgangsmaterials vor der Kochung und einer CCE-Stufe in der Weiterbehandlung ein Zellstoff in hoher Ausbeute und Reinheit gewonnen werden kann, der sich in hervorragender Weise zur Herstellung von Viskose- und Lyocellfasern eignet.

Die Dampfbehandlung wird erfindungsgemäß bei einer Temperatur von 120°C oder mehr und einem P-Faktor von 50 oder weniger durchgeführt. Dies sind deutlich intensivere Bedingungen als bei einem "low temperature steaming", wie es z.B. in der WO 98/15687 beschrieben wird.

Unter den erfindungsgemäßen Bedingungen wird durch die Dampfbehandlung eine Erhöhung der Porosität des Aufschlußmaterials (Holzschnitzel) sowie eine partielle Spaltung der Lignin-Kohlenhydratbindungen erreicht.

Es findet jedoch noch keine chemische Spaltung der glycosidischen Bindungen statt, wie dies bei einem Vorhydrolyseverfahren der Fall wäre. Typischerweise werden bei einem Vorhydrolyseverfahren P-Faktoren von mehr als 50 erreicht. Das Konzept des "P-Faktors" wird beispielsweise in "Handbook of Pulp", Vol. 1, Wiley-VCH 2006, Seiten 343-345 beschrieben. Die Intensität der erfindungsgemäßen Dampfbehandlung beträgt bevorzugt nur ca. ein Zehntel einer herkömmlichen Vorhydrolyse.

Das bedeutet, dass bei der erfindungsgemäß vorgesehenen Dampfbehandlung im Unterschied zu Vorhydrolyseverfahren eine höhere Ausbeute an Zellstoff und damit eine wirtschaftlichere Herstellung erreicht werden kann. Der erhaltene Zellstoff enthält zwar auch einen höheren Anteil an Hemicellulosen, durch die erfindungsgemäße Kombination der Schritte Dampfbehandlung und Kalt-Alkaliextraktion wird aber offenbar erreicht, dass sich der Zellstoff trotzdem hervorragend zur Herstellung von Cellulosefasern eignet.

Zur Dampfbehandlung wird das Ausgangsmaterial insbesondere bevorzugt bei einer Temperatur von 150 bis 180°C mit Mitteldruckdampf behandelt.

In an sich bekannter Weise kann das Ausgangsmaterial vor der Kochung einer Imprägnierung unterzogen werden. Wenn auch eine Dampfbehandlung durchgeführt wird, findet die Imprägnierung nach der Dampfbehandlung statt.

Im erfindungsgemäßen Verfahren kann die Kochung und die Dampfbehandlung und/oder die Imprägnierung des Ausgangsmaterials in demselben Kocher durchgeführt werden.

Bevorzugt wird im erfindungsgemäßen Verfahren die Kochung in Form einer kontinuierlichen Batch-Kochung (CBC) durchgeführt. Die CBC-Technologie ist z.B. aus der EP 0 891 438 B1 sowie aus Wizani, W., et al. "CBC - Continuous batch cooking. The revolution in kraft cooking" in Pulping process and product quality conference, 2000, Boston, MA, USA, bekannt.

Bei Anwendung der CBC-Technologie entsprechen die Schritte Imprägnierung und Heißverdrängung (d.h. die Verdrängung der Imprägnierlauge durch Kochlauge) den in der CBC-Technologie geläufigen Verfahren.

Die erfindungsgemäß hergestellten Kraftzellstoffe können zur Erreichung der erforderlichen Reinheits- und Weissgrade in an sich bekannter Weise einer TCF- oder ECF-Bleiche unterzogen werden.

In einer weiteren bevorzugten Ausführungsform kann ein Teil der in der Kalt-Alkali-Extraktionsstufe entstehenden Presslauge mittels eines Membrantrennverfahrens, vorzugsweise einer Nano- oder einer Ultrafiltration gereinigt werden und zumindest ein Teil des Retentates des Membrantrennverfahrens der zweiten Kochlauge zugemischt werden.

Die Reinigung der Presslauge eines CCE-Verfahrens mittels eines Membrantrennverfahrens ist in der WO 2005/118923 beschrieben. Das dabei anfallende Retentat enthält die gesamte Menge der in der Presslauge befindlichen Beta-Cellulose und mehr als die Hälfte der Gamma-Cellulose. Im Fall von Laubholzzellstoffen besteht die Beta-Celluloselösung aus fast reinem Xylan.

Das Membrantrennverfahren kann zweistufig durchgeführt werden, wobei zwischen den beiden Trennstufen eine Verdünnung des Retentates der ersten Stufe mit Wasser durchgeführt wird.

Dabei kann in der zweiten Stufe eine Nanofiltration des verdünnten Retentates oder auch eine Dialyse des Retentates der ersten Stufe durchgeführt werden. In beiden Fällen wird durch diesen Schritt die NaOH-Rückgewinnung erhöht, bei gleichzeitiger Konzentrierung der Hemicellulosenphase.

Anstelle oder zusätzlich zur Rückführung des Retentates zur zweiten Kochlauge können daher aus zumindest einem Teil des Retentates des Membrantrennverfahrens die darin enthaltenen Hemicellulosen, insbesondere Xylane, gewonnen werden. In der US 2005/0203291 wird ein Verfahren zur Gewinnung von Xylanen aus einer an Xylanen reichen Phase beschrieben.

Im Unterschied zu diesem bekannten Verfahren, werden in einer bevorzugten Ausführungsform des erfindungsgemäßen Verfahrens ausfällbare Hemicellulosen, insbesondere die Xylane, aus dem Retentat des Membrantrennverfahrens mittels einer umgekehrten Fällung gewonnen.

Zur umgekehrten Fällung wird bevorzugt ein Agens aus der Gruppe bestehend aus Mineralsäuren, CO₂ und ein- oder mehrwertigen Alkoholen eingesetzt. Der Sedimentationsrückstand kann anschließend durch geeignete Anlagen (z.B. eine Waschpresse) gewaschen und mechanisch entwässert werden.

Die so gewonnenen Xylane können zumindest teilweise zu Xylo-Oligosacchariden weiterverarbeitet werden. Xylooligosaccharide haben verschiedene Anwendungsmöglichkeiten, z.B als präbiotisch wirksames Nahrungsmitteladditiv.

Zur Herstellung dieser Xylo-Oligosaccharide kann bevorzugt ein Verfahren ausgewählt aus der Gruppe bestehend aus Hydrothermolyse und Enzymatischer Hydrolyse durchgeführt werden.

Eine weitere bevorzugte Ausführungsform des erfindungsgemäßen Verfahrens ist dadurch gekennzeichnet, dass es mit einem Verfahren zur Herstellung eines Papierzellstoffes gekoppelt ist und zumindest ein Teil der in der Kalt-Alkali-Extraktionsstufe entstehenden Presslauge und/oder zumindest ein Teil des Retentates eines an der Presslauge durchgeführten Membrantrennverfahrens der Kochlauge eines zur Herstellung von Papierzellstoff durchgeführten Kochverfahrens zugeführt wird.

Durch die Koppelung der Chemiezellstoff- und Papierzellstoffherstellung und Ausnutzung der im CCE-Schritt des erfindungsgemäßen Verfahrens anfallenden Stoffströme in der Papierzellstoffherstellung ist sowohl eine qualitative als auch ökonomische Verbesserung des Papierzellstoffherstellungsverfahrens möglich.

Das Filtrat der CCE-Stufe oder das Retentat eines nanofiltrierten CCE-Filtrates enthält, wie oben bereits dargestellt, einen hohen Gehalt von Hemicellulose. Eine Kochlauge, die mit Hemicellulose angereichert ist, eignet sich besonders zur Herstellung von Hochausbeute-Papierzellstoffen mit erhöhtem Hemigehalt.

Eine weitere bevorzugte Ausführungsform des erfindungsgemäßen Verfahrens ist dadurch gekennzeichnet, dass an dem durch die Kochung erhaltenen Zellstoff im Zuge der Weiterbehandlung zusätzlich zu einem allfällig durchgeführten Bleicheschritt eine Behandlung zur Einstellung des Polymerisationsgrades (DP) durchgeführt wird.

Die Behandlung ist bevorzugt aus der Gruppe bestehend aus oxidativen Bleichverfahren, säurehydrolytischen Verfahren und Elektronenbestrahlungsverfahren ausgewählt.

Der DP-Abbau von Zellstoffen auf ein gewünschtes DP-Niveau kann sowohl durch chemisch-oxidative Weise als auch durch Elektronenbestrahlung erfolgen. Als Oxidationsmittel für den DP-Abbau eignen sich am besten Hypochlorit- oder Ozonbehandlungen. Nachteilig bei chemisch-oxidativen Verfahren ist, dass aufgrund beschränkter Zugänglichkeit (der Oxidationsmittel) in die kristallinen Bereiche der Kettenabbau sehr heterogen verläuft, wodurch die Molmassenverteilung deutlich breiter verbleibt als es einem statistischen Abbau entspräche.

Die Elektronenbestrahlung zeigt dagegen einen weitgehend statistischen Abbau, sodass die Polydispersität der Molmassenverteilung mit fortschreitendem DP-Abbau deutlich stärker abnimmt als im Falle chemisch-oxidativer Abbauverfahren, wie am Beispiel der Ozonbehandlung gezeigt werden konnte.

Die Elektronenbestrahlung von Zellstoffen zur DP-Einstellung ist an sich bekannt und wurde bereits von vielen Arbeitsgruppen untersucht [z.B. Kukielka, A., et al., Electron-beam treatment of cellulose pulps for production derivatives. Zeszyty Naukowe Politechniki Slaskiej, Chemia, 2001. 146: p. 117-120; Iller, E., et al., Electron-beam stimulation of the reactivity of cellulose pulps for production of derivatives. Radiation Physics and Chemistry, 2002. 63: p. 253-257; Stepanik, T.M., D.E. Ewing, and R. Whitehouse, Electron treatment of wood pulp for the viscose process. Radiation Physics and Chemistry, 2000. 57: p. 337-379].

In diesen Arbeiten gehen die Autoren davon aus, dass die Elektronenbestrahlung als Ersatz für die alkalische Vorreife von Fertigzellstoffen eingesetzt wird. Nachdem die Elektronenbestrahlung im Zellstoff sehr reaktive Gruppen hinterlässt (Carbonylgruppen), bewirkt aber eine nachfolgende alkalische Behandlung einen weiteren starken DP-Abbau und die Bildung chromophorer Strukturen in der Alkalicellulose.

Noch ungünstiger wirkt sich der Einsatz von bestrahltem Zellstoff im Lyocellprozess aus. Hier induzieren die reaktiven Gruppen Abbaureaktionen des Lösungsmittels NMMO, deren Abbauprodukte wiederum die Celluloseschädigung fortsetzen. Dies ist einer der Gründe, warum die DP-Einstellung mittels Elektronenbestrahlung bislang in der Praxis nicht durchgeführt wird.

Die vorliegende Erfindung umgeht dieses Problem, indem die Zellstoffe an beliebigen Positionen der Faserlinie, d.h. während des Herstellungsverfahrens des Zellstoffes, ausgehend vom ungebleichten Zellstoff bis vor der letzten Bleichstufe, einer Elektronenbestrahlung ("E-Beam"-Behandlung) ausgesetzt werden.

Die Elektronenbestrahlung des Zellstoffes kann bevorzugt so durchgeführt werden, dass der Zellstoff in einer Stoffdichte von zumindest 35%, bevorzugt 40-50% und in einer Schichtdicke von 2 bis 6 mm, bevorzugt 3 bis 4 mm, vorliegt sowie eine Beschleunigungsspannung von weniger als 2,5 MeV eingesetzt wird.

Schichtdicken zwischen 2 und 6 mm können auch mit niedrigen Beschleunigungsspannungen weitgehend homogen durchstrahlt werden können. Der im Zellstoffvlies vorhandene Wasseranteil muss natürlich bei der Wahl der Bestrahlungsdosis berücksichtigt werden. Die für einen bestimmten DP-Abbau erforderliche Dosis erhöht sich bei einer Stoffdichte von 50% grob um das Doppelte.

Eine weitere günstige Ausführungsform des erfindungsgemäßen Verfahrens besteht darin, dass nach der Behandlung zur Einstellung des Polymerisationsgrades eine alkalischoxidative Behandlung, bevorzugt eine alkalische Peroxidbehandlung durchgeführt wird.

Insbesondere durch eine Elektronenbestrahlung entstandene labile Gruppen werden durch diese nachfolgende alkalische Peroxidstufe stabilisiert und können daher keine nachteilige Wirkung auf die Weiterverarbeitungsprozesse ausüben können. In einer Peroxid(P)-Stufe nach einer EBeam-Stufe werden die Carbonylgruppen großteils zu Carboxylgruppen oxidiert. Dabei entstehen kurzkettige Verbindungen mit stark chromophoren Gruppen, die ins Bleichfiltrat ausgewaschen werden. Die hochmolekularen, oxidierten Rückstände liegen größtenteils als Aldonsäuregruppen vor und sind somit nachfolgenden alkalischen Behandlungen gegenüber stabil.

Nachfolgend sind typische Verfahrenskonzepte bei Einsatz einer Elektronenbestrahlung angeführt:
TCF-Bleichsequenz:
   W-EBeam-OP-A-Z-P; W-EBeam-OP-A-P, W-EBeam-OP- P, W-OP-A-Z-EBeam-P, W-OP-A-EBeam-P, W-OP-EBeam-P.
ECF-Bleichsequenz:
   W-EBeam-OP-D-E-P; W-EBeam-OP-D-E-D, W-EBeam-D-E-D, W-D-E-EBeam-P

Dabei bedeuten die verwendeten Abkürzungen: W... Wäsche, OP... peroxidverstärkte Sauerstoffdelignifizierung, E...alkalische Extraktion, D...Chlordioxidstufe, Z...Ozonstufe, P...alkalische Peroxidstufe.

Ein weitere bevorzugte Ausgestaltung des erfindungsgemäßen Verfahrens ist dadurch gekennzeichnet, dass der Kochungsschritt des Zellstoffes in zwei Stufen durchgeführt wird, wobei in der ersten Stufe eine Delignifizierung mittels einer ersten Kochlauge auf eine Kappazahl von 35 bis 70 im Fall von Nadelhölzern als Ausgangsmaterial und auf eine Kappazahl von 30 bis 60 im Fall von Laubhölzern als Ausgangsmaterial durchgeführt wird, und in der zweiten Stufe mittels einer zweiten Kochlauge die Kochung bis zum gewünschten Reinheitsgrad des Zellstoffes weitergeführt wird.

Diese Ausführungsform basiert somit auf dem Konzept einer zweistufigen Kraftkochung.

Die Aufgabe der ersten Kochstufes ist es, den Hauptteil der Bulk-Delignifizierung durchzuführen. Dabei werden erfindungsgemäß Nadelhölzer auf eine Kappazahl von 35 bis 70 bzw. Laubhölzer auf eine Kappazahl von 30 bis 60 delignifiziert.

Der Anteil des H-Faktors der ersten Kochstufe beträgt, bezogen auf den H-Faktor beider Kochstufen zusammen, bevorzugt 40% bis 80% im Fall von Nadelhölzern als Ausgangsmaterial bzw. 20% bis 60% im Fall von Laubhölzern als Ausgangsmaterial.

Der H-Faktor definiert die relative Geschwindigkeit der Lignin-Auflösung und hängt von der Kochungszeit und der Temperatur ab. H-Faktor 1 entspricht einer Kochzeit von 1 Stunde bei 100°C. Dabei drückt der H-Faktor die Kochzeit und die Kochtemperatur als eine einzige Variable aus. Es wird eine relative Reaktionsrate (unter Bezug auf eine Temperatur von 100°C, wo die Reaktionsrate definitionsgemäß 1 beträgt), die mittels eines Arrhenius-schen Ansatzes unter Einsatz einer bestimmten Aktivierungsenergie berechnet wird, über die Zeit der Kochung integriert.

Bevorzugt wird beim Übergang von der ersten zur zweiten Kochstufe die erste Kochlauge durch die zweite Kochlauge ersetzt. Z.B. kann im Fall eines kontinuierlichen Kochverfahrens die Zufuhr der ersten Kochlauge gestoppt werden und gleichzeitig die Zufuhr der zweiten Kochlauge aus einem zweiten Kochlaugetank gestartet werden. Die Wahl geeigneter Durchflussraten ermöglicht dabei einen weitgehend vollständigen Eintrag der Kochlaugen während der beiden Kochphasen.

Die erste Kochlauge weist bevorzugt eine EA (Effektivalkali)-Konzentration von 10 g/L bis 30 g/L, bevorzugt 15 g/L bis 25 g/L, insbesondere bevorzugt 20 g/L, sowie eine Sulfidität von 50 % bis 120 % , bevorzugt 100 %, auf. Die Sulfidität S ist nach der Testmethode SCAN-N 30:85 definiert als S = 2[HS]/([OH]+[HS]).

In einer weiteren bevorzugten Ausführungsform unterscheidet sich die Zusammensetzung der zweiten Kochlauge von jener der ersten Kochlauge.

Die Zusammensetzung der zweiten Kochlauge kann insbesondere durch Zumischung geeigneter Laugeströme den jeweiligen Anforderungen an die Zellstoffqualität angepasst werden.

Bevorzugt kann die zweite Kochlauge mit einer Lauge ausgewählt aus der Gruppe bestehend aus dem Filtrat einer nachfolgenden Waschstufe, einer Weisslauge aus der Kaustifizierung und der Presslauge aus einer Kaltalkaliextraktionsstufe angereichert sein.

Bevorzugt werden im erfindungsgemäßen Verfahren beide Kochstufen in Form einer kontinuierlichen Batch-Kochung (CBC) durchgeführt. Diese Technologie bietet insbesondere eine höhere Flexibilität bezüglich der Gestaltung der zweiten Kochstufe. Im Falle modifizierter kontinuierlicher Kochverfahren bietet sich die Zugabe von entweder hemicellulose-reicher oder hemicellulose-armer Kochlauge in der Gegenstromkochzone (MCC- und EMCC/ITC-Kochverfahren) oder in der erweiterten Kochzone (EMCC/ITC-Kochverfahren) an.

Die vorliegende Erfindung betrifft auch die Verwendung der erfindungsgemäß hergestellten Chemiezellstoffe zur Herstellung von Viskose- und Lyocellfasern.

Die Methoden zur Herstellung von Viskose- und Lyocellfasern sind dem Fachmann an sich bekannt.

Lyocellfasern, die durch Verspinnen eines erfindungsgemäß hergestellten Chemiezellstoffes erhältlich sind, zeichnen sich insbesondere durch folgende Merkmale aus: Ihr Gehalt H an Hemicellulose liegt bevorzugt bei mehr als 3,5 Gew.% und ist damit etwas höher als der Hemicellulosengehalt von Lyocellfasern, die aus hochwertigen und aufwendig (d.h. insbesondere mit vergleichsweise geringer Ausbeute) herzustellenden Vorhydrolyse-Kraftzellstoffen, wie z.B. in der WO 94/12719 beschrieben, hergestellt werden. Der Gehalt H kann bei weniger als 5 Gew.% liegen.

Trotz dieses erhöhten Gehaltes an Hemicellulose beträgt die Mercerisierausbeute der erfindungsgemäßen Lyocellfaser (gemäß unten beschriebener Messmethode) 90% oder mehr. Damit weist die erfindungsgemäße Lyocelllfaser eine deutlich höhere Mercerisierbeständigkeit auf als Lyocellfasern, die aus einem nicht-erfindungsgemäßen Kraftzellstoff mit hohem Hemicellulosengehalt, wie z.B. in der WO 99/47733 beschrieben, hergestellt werden.

Die Festigkeit der erfindungsgemäßen Lyocellfaser beträgt in konditioniertem Zustand 37 cN/tex oder mehr und liegt damit in demselben Größenbereich, der bislang nur unter Verwendung hochwertiger und aufwendig herzustellender Vorhydrolyse-Kraftzellstoffe erreichbar war.

Von aus solchen hochwertigen Vorhydrolyse-Kraftzellstoffen hergestellten Lyocellfasern unterscheidet sich die erfindungsgemäß hergestellte Lyocellfaser auch dadurch, dass die mittlere Molmasse der aus der Faser isolierbaren Xylane 20 kDa oder mehr beträgt (siehe die weiter unten beschriebene Meßmethode). Dagegen weisen Xylane aus Lyocellfasern, die aus hochwertigen Vorhydrolyse-Kraftzellstoffen (oder auch Sulfitzellstoffen) stammen, ein Massenmittel (Mw) von≤10 kDa auf.

In Summe sind somit die erfindungsgemäßen Lyocellfasern von bisher bekannten Fasern deutlich unterscheidbar und besitzen den Vorteil, dass sie trotz Einsatz des vergleichsweise günstig nach dem erfindungsgemäßen Verfahren herstellbaren Chemiezellstoffes exzellente Fasereigenschaften aufweisen.

Die vorliegende Erfindung betrifft auch eine Viskosefaser, die durch das Verspinnen eines erfindungsgemäß hergestellten Chemiezellstoffes erhältlich ist.

Die erfindungsgemäße Viskosefaser zeichnet sich insbesondere dadurch aus, dass ihr Gehalt H an Hemicellulose mehr als 2,0 Gew.% beträgt und ihre Mercerisierbeständigkeit bei 90% oder mehr liegt. Die Festigkeiten der erfindungsgemäßen Viskosefaser liegen trotz hohem Hemicellulosegehalt auf dem Niveau der besten Viskosefasern, die aus hochwertigen Vorhydrolyse-Kraftzellstoffen (oder auch Sulfit-Zellstoffen) hergestellt werden. Insbesondere kann die erfindungsgemäße Viskosefaser eine Festigkeit in konditioniertem Zustand von 23 cN/tex oder mehr und eine Dehnung in konditioniertem Zustand von 18% oder mehr aufweisen.

Die vorliegende Erfindung wird im Folgenden anhand der Figuren und Beispiele näher erläutert.
Figur 1 zeigt ein Schema des Grundkonzeptes des erfindungsgemäßen Verfahrens und seiner Anwendungsmöglichkeiten.
Figur 2 zeigt einen Plot von Grenzviskosität vs. Kappazahl von ein- und zweistufigen CBC-Kochungen von Fichtenholz.
In der Figur 3 sind Temperatur- und Hydroxidionenprofile von ein- und zweistufigen Nadelholz-CBC-Kochungen dargestellt.
Figur 4 zeigt einen Plot von Gesamtausbeute vs. Kappazahl von ein- und zweistufigen *Eucalyptus globulus*-CBC-Kochungen mit und ohne Hemicellulosenanreicherung.
Figur 5 zeigt einen Plot von Grenzviskositätszahl vs. Kappazahl von ein- und zweistufigen *Eucalyptus globulus-CBC* Kochungen mit und ohne Hemicellulosenanreicherung.
Figur 6 zeigt die Molmassenverteilung von *Eucalyptus-globulus*-Kraftzellstoffen.
Figur 7 zeigt den Vergleich der Molmassenverteilung eines CBC*-Zellstoffes mit einem VISCBC Zellstoff.
Figur 8 zeigt die Festigkeiten von aus verschiedenen Zellstoffen hergestellten Normal-Viskosefasern im konditionierten Zustand.
Figur 9 stellt den Einfluss der Ozoneinsatzmenge und der Strahlendosis auf den DP-Abbau unterschiedlich vorbehandelter CBC- und LH-Sulfit-Zellstoffe dar.
Figur 10 zeigt die Molmassenverteilung eines mittels EBeam und Ozon auf eine GVZ von 440 ml/g abgebauten CBC-Zellstoffes.
Figur 11 zeigt die Molmassenverteilung eines aus einem CCE-Filtrat durch umgekehrte Fällung in Mineralsäure isolierten Xylans.
Figur 12 zeigt die Molmasseverteilung der mittels DMSO aus Zellstoffen und daraus hergestellten Fasern isolierten Xylane (Graphische Auswertung der GPC-Analyse)
Figur 13 stellt die Intensität der Dampfbehandlung (CBC*) gemäß der Erfindung einem Vorhydrolyseverfahren (VISCBC) gegenüber. Der P-Faktor der erfindungsgemäßen Dampfbehandlung liegt bei unter 50; der P-Faktor der VISCBC-Vorhydrolyse bei 700.

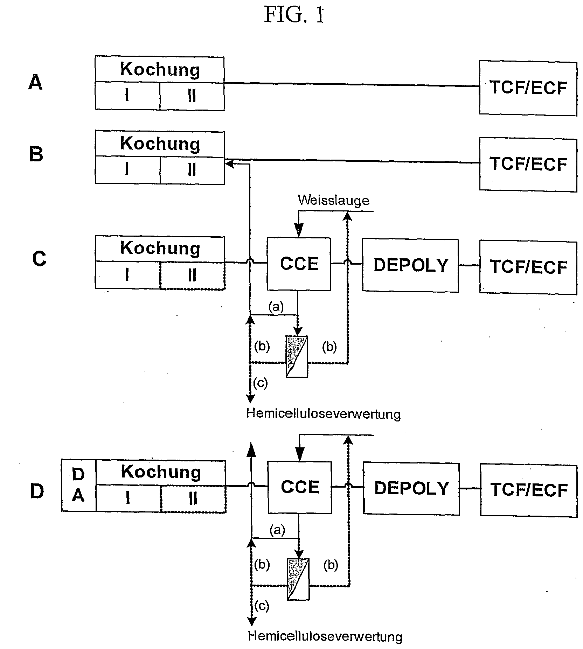

In der Figur 1 sind das Grundkonzept des erfindungsgemäßen Verfahrens und seine verschiedenen Anwendungsmöglichkeiten schematisch dargestellt.

Die Variante A zeigt die Herstellung eines Papierzellstoffes mit hohem Festigkeitspotenzial: Dazu wird ein zweistufiges Kraftverfahren (als Batch- oder z.B. CBC-Verfahren) mit einer TCF- oder ECF-Bleichsequenz kombiniert. Die Zweistufenfahrweise ermöglicht eine optimale Anpassung der Kochbedingungen an die jeweiligen Erfordernisse.

Die Variante B zeigt das Konzept der Herstellung eines Hochausbeute-Papierzellstoffes (Zellstoff mit erhöhtem Hemicellulosengehalt): Das Verfahren verläuft dazu grundsätzlich gleich wie in Variante A. Die Kochlauge für die zweite Stufe der Kochung wird aber hier mit hochmolekularer Hemicellulose aus hemicellulosereicher Lauge angereichert. Diese hemicellulosereiche Lauge kann insbesondere aus einem CCE-Prozess stammen, der in einem mit dem Verfahren B gekoppelten Verfahren C zur Herstellung eines Hochausbeute-Lyocellzellstoffes durchgeführt wird. Die hemicellulosereiche Lauge kann z.B. (a) das CCE-Filtrates oder (b) das Retentates eines nanofiltrierten CCE-Filtrates sein.

Die bereits erwähnte Variante C in der Figur 1 führt zu einem Hochausbeute-Lyocellzellstoff zur Herstellung von Lyocellfasern mit den höchsten textilmechanischen Festigkeitseigenschaften: Das Grundschema verläuft gemäß Variante A. Der gekochte Zellstoff wird aber hier, entweder direkt nach Wäsche und Sortierung oder nach jeder Bleich-, bzw. Depolymerisationsstufe ("DEPOLY"), vorzugsweise nach einer O-Stufe, in einer CCE-Veredelungsstufe behandelt.

Im Verbund mit einer dazu parallel erfolgenden Papierzellstoffproduktion, siehe Schema B, kann CCE-Filtrat zur Aufstärkung von Weisslauge, vorzugsweise in der zweiten Kochstufe, eingesetzt werden.

Bei fehlender oder zu niedriger Papierzellstoffproduktion kann die Lauge nach Reinigung mittels Nanofiltration rezykliert werden. Das Permeat (b) wird zur CCE-Stufe rückgeführt, aus dem Retentat (c) können Hemicellulosen gewonnen werden.

Die Variante D in Figur 1 zeigt eine bevorzugte Ausführungsform des erfindungsgemäßen Verfahrens zur Herstellung von Hochausbeute-Dissolvingzellstoffen, das ist insbesondere (a) Viskosezellstoff für Fasern mit hohen textilmechanischen Eigenschaften, (b) alle übrigen Dissolvingzellstoffe, die zu Celluloseester- oder Ether derivatisiert werden.

Das Grundschema verläuft gemäß Variante C. Zur Verbesserung der Zellstoffreaktivität wird das Holz einer Dampfaktivierungsbehandlung (**DA-**Stufe) unterzogen, bei der die Verbundstruktur des Holzes stark aufgelockert wird, mit dem Ziel, in der nachfolgenden alkalischen Kochung die niedermolekularen Hemicellulosen selektiv abzutrennen.

### Beispiele

### Beispiel 1 - Zweistufige CBC-Kochung von Fichtenholz

Fichtenholz wird in einem 10.8 l großen Versuchskocher nach dem CBC-Verfahren (continuous batch cooking) zu Zellstoff mit Kappazahlen zwischen 16 und 42 gekocht. Die einstufige Referenzkochung weist folgende Bedingungen auf:

| | |
|---|---|
| Imprägnierung: | [OH-] = 0.37 mol/l, [HS-] = 0.22 mol/l; mittlere Temperatur 120 °C, 30 min (Füllrichtung von unten nach oben) |
| Aufheizung: | Verdrängung der Imprägnierlauge durch voreingestellt Kochlauge (Verdrängungsrichtung von oben nach unten). Nach 28 min. wird die Zieltemperatur von 160 °C erreicht |
| Kochstufe: | Kochlauge wird von oben nach unten in einer Durchflussmenge des 2-fachen des Kochervolumens pro Stunde durch den Kocher gepumpt: 160 °C, [OH-] = 0.62 mol/l, [HS-] = 0.30 mol/l, H-Faktoren: 800 - 1600. |

Imprägnierung und Aufheizung der erfindungsgemäßen zweistufigen CBC-Kochung wurden analog der einstufigen Variante durchgeführt.

| | |
|---|---|
| Kochstufe 1: | 160 °C, [OH-] = 0.48 mol/l, [HS-] = 0.48 mol/l, H-Faktor = 750 = konstant |
| Kochstufe 2: | 160 °C, [OH-] = 0.62 mol/l, [HS-] = 0.32 mol/l, der H-Faktor wurde von 100 - 600 variiert |

Es wurden zwei Varianten der zweistufigen CBC-Kochung durchgeführt, deren Unterschied lediglich in der Konzentration gelöster Stoffe bestand:
a) DS ∼ 80 g/l (Standard)
b) DS ∼ 40 g/l (Low Solid-CBC)

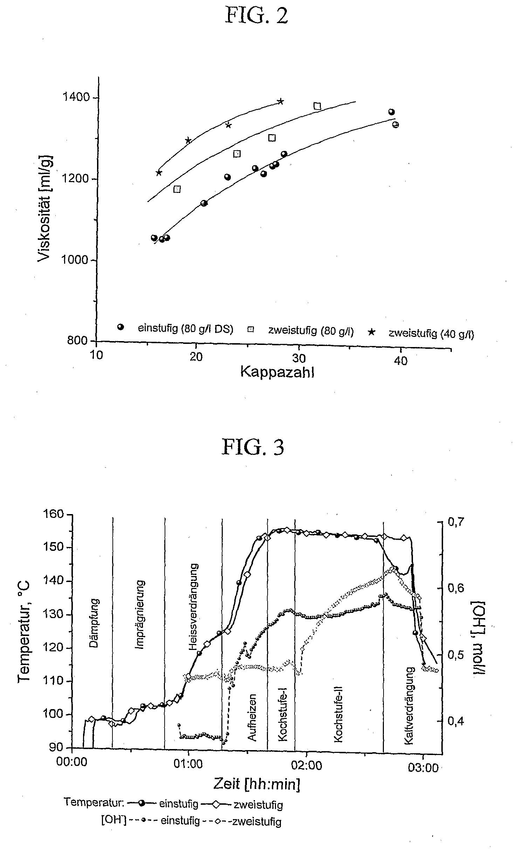

Die Versuchsergebnisse sind in der Figur 2 anhand eines Selektivitätsplots (Grenzviskositätszahl vs. Kappazahl) zusammengefasst. Die Ergebnisse zeigen, dass die bereits hohe Selektivität der einstufigen CBC-Kochung durch die beiden Zweistufenvarianten weiter verbessert werden kann.

In der Figur 3 sind Temperatur- und Hydroxidionenprofile der oben beschriebenen ein- und zweistufigen Nadelholz-CBC-Kochungen dargestellt.

Wie in Figur 3 gezeigt, entsteht durch eine zweistufige Fahrweise - im Falle gleicher Delignifizierungsgrade - keine Verlängerung der Kochzeit. Die Hydroxidionenkonzentration im Kocherauslauf zeigt einen raschen Anstieg im Verlauf der zweiten Kochstufe und erreicht bereits zur Hälfte der gewählten Kochzeit die Zielkonzentration.

### Beispiel 2 - Zweistufige CBC-Kochung von Eucalyptus globulus

*Eucalyptus globulus* wird in einem 10.8 l großen Versuchskocher nach dem CBC-Verfahren (continuous batch cooking) zu Zellstoff mit Kappazahlen zwischen 13 und 28 verarbeitet.

Die einstufige Referenzkochung (one-stage) weist folgende Bedingungen auf:

| | |
|---|---|
| Imprägnierung: | [OH-] = 0.38 mol/l, [HS-] = 0.25 mol/l; mittlere Temperatur 120 °C, 30 min (Füllrichtung von unten nach oben) |
| Aufheizung: | Verdrängung der Imprägnierlauge durch voreingestellt Kochlauge (Verdrängungsrichtung von oben nach unten). Nach 30 min. wird die Zieltemperatur von 155 °C erreicht |
| Kochstufe: | Kochlauge wird von oben nach unten in einer Durchflussmenge des 2-fachen des Kochervolumens pro Stunde durch den Kocher gepumpt: 155 °C, [OH-] = 0.65 mol/l, [HS-] = 0.34 mol/l, H-Faktoren: 200 - 500. |

Imprägnierung und Aufheizung der zweistufigen CBC-Kochung (two-stage) wurden analog der einstufigen Variante durchgeführt.

| | |
|---|---|
| Kochstufe 1: | 155 °C, [OH-] = 0.46 mol/l, [HS-] = 0.37 mol/l, H-Faktor = 180 = konstant |
| Kochstufe 2: | 155 °C, [OH-] = 0.62 mol/l, [HS-] = 0.37 mol/l, der H-Faktor wurde von 100 bis 400 variiert. |

In einer zweiten Variante wurde die Kochlauge der zweiten Stufe mit dem hemireichen Filtrat einer CCE-Behandlung hergestellt.

Die Bedingungen in der Kochstufe 2 wurden dabei folgendermaßen eingestellt: 155 °C, [OH-] = 0.37 mol/l, [HS-] = 0.16 mol/l, beta-Cellulosekonzentration (aus CCE-Filtrat) = 10 g/l, H-Faktor = 150 - 400.

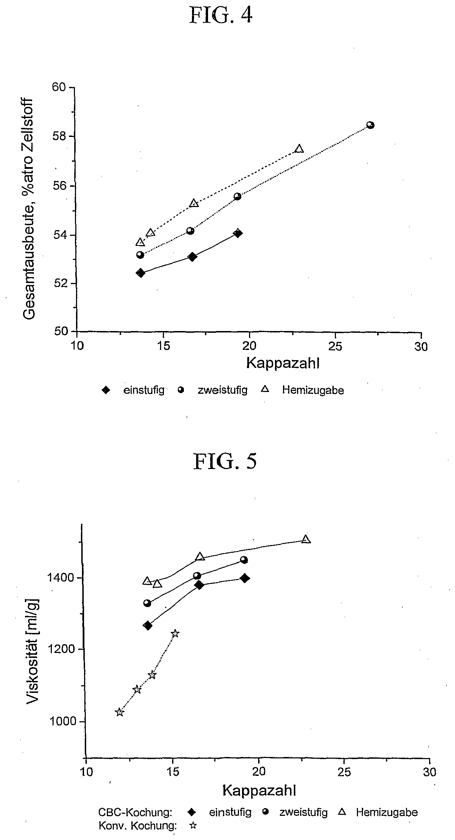

Wie aus der Figur 4 ersichtlich, konnte die Ausbeute konnte im gesamten Kappazahlbereich sowohl für die "einfache" Zweistufenvariante ("two-stage") als auch für die mit Hemicellulose verstärkte Zweistufenvariante ("hemi-add") im Vergleich zur einstufigen Betriebsweise deutlich verbessert werden.

Der Vorteil der zweistufigen Verfahrensführung zeigt sich auch bei der Aufschlussselektivität, die in Figur 5 als Plot Grenzviskositätszahl vs. Kappazahl dargestellt ist.

Es fällt auf, dass die Kochselektivität, sprich die Grenzviskosität bei einer bestimmten Kappazahl, nach sämtlichen CBC-Kochungen im Vergleich zu konventionell hergestellten *Eucalyptus globulus-Kochungen* sehr hoch ist.

### Beispiel 3 - Herstellung von Hochausbeute-Chemiezellstoffen für die Weiterverarbeitung zu Viskose- und Lyocellfasern

Das Holz wurde vor Beginn der CBC-Kochung einer Dampfaktivierung (DA) ausgesetzt, indem der Kocherinhalt mit Hilfe von Mitteldruckdampf auf eine Temperatur von ca. 165 °C gebracht wurde. Die CBC-Kochung wurde einstufig durchgeführt.

Die Kombination der Prozesse DA+CBC wird in der Folge zur besseren Kennzeichnung "CBC*" bezeichnet. CBC*-Zellstoff wurde nach einer O-Delignifizierung kaltalkaliextrahiert, mit dem Ziel, die alkalilöslichen Hemicellulosen zu entfernen. Die DP-Einstellung erfolgte im Rahmen der Nachbleiche durch eine Ozonbehandlung (Z). Die nachfolgende P-Bleiche diente zur Stabilisierung der Cellulose und zur Einstellung des gewünschten Endweissgrades. Als Referenzzellstoff wurde ein Vorhydrolyse-Kraftzellstoff mit Hilfe der "VISCBC"-Technologie hergestellt (modifizierter Visbatch-Prozess, siehe Wizani, W., et al. "CBC - Continuous batch cooking. The revolution in kraft cooking" in Pulping process and product quality conference, 2000, Boston, MA, USA).

Die nachstehende Tabelle 1 zeigt die wichtigsten Kenndaten der ungebleichten Zellstoffe.

**Tab. 1: Charakterisierung der ungebleichten E. globulus-Zellstoffe: CBC*-Zellstoff (Papierzellstoff) und VISCBC-Kochverfahren, als Referenz für einen herkömmlichen Chemiezellstoff.**

| Parameter | | Holz | CBC* #134 | VISCBC #141/142 |
|---|---|---|---|---|
| P-Faktor | | | 0 | 490 |
| Ausbeute, sortiert | % | 100,0 | 52,9 | 37,2 |
| Celluloseausbeute | % Holz | 46,1 | 41.0 | 34,9 |
| Kappazahl | | | 13,1 | 6,0 |
| Grenzviskosität | ml/g | | 1281 | 963 |
| Weissgrad | % ISO | | 37,7 | 42,8 |
| R18-20°C | % Zellstoff | | 92,6 | 96,9 |
| R18-50°C | % Zellstoff | | 84,4 | 96,2 |
| Xylan | % Zellstoff | 16,0 | 18,4 | 3,1 |
| | % Holz | 16,0 | 9,7 | 1,1 |

Der P-Faktor drückt dabei die Intensität der Vorhydrolyse aus. Die Berechnung beruht auf dem selben Konzept wie beim H-Faktor, wobei eine unterschiedliche Aktivierungsenergeie (123 kJ/mol) eingesetzt wird.

Die Ausbeute (Cellulosegehalt) des CBC*-Zellstoffes war um 15.7%-Punkte (6.1%-Punkte) höher als im Vergleich zum VISCBC-Referenzzellstoff (siehe Tab.l).

Die CBC*- und VISCBC-Zellstoffe wurden anschließend mit Hilfe einer OZP-TCF-Sequenz fertiggebleicht. Zur Verringerung der niedermolekularen Hemicellulosen wurden die CBC*-Zellstoffe nach einer O-Delignifizierung kaltalkaliextrahiert (CCE-Stufe).

Die CCE-Behandlung wurde bei zwei verschiedenen NaOH-Konzentrationsniveaus, 50 g/l und 100 g/l, durchgeführt. Als Alkaliquelle diente Weisslauge mit einer Sulfidität von 26%. Alle anderen Bedingungen, wie Temperatur (30°C), Verweilzeit (30 min) und Stoffdichte (10%) wurden bei beiden Versuchen konstant gehalten.

Die Nachbleiche erfolgte mit Hilfe einer Z-P-Sequenz bei allen Zellstoffen, wobei die Aufgabe der Ozonbleiche in erster Linie darin bestand, den DP auf das Niveau für Regeneratzellstoffe einzustellen (DPv 950 - 1200, entspricht einer Grenzviskositätszahl GVZ von 420 - 500 ml/g). Die wesentlichsten Prozess- und Zellstoffdaten (im Rahmen der Zellstoffbleiche) sind in der nachstehenden Tabelle 2 aufgelistet.

**Tab. 2: Charakterisierung der gebleichten Hochausbeute E. globulus-CBC*-CCE-Chemiezellstoffe und als Referenz einen gebleichten VISCBC-Chemiezellstoff.**

| **Parameter** | Einheiten | **CBC*-Referenz** | | | **CBC*-CCE50** | | | | **CBC*-CCE100** | | | | **VISCBC-Referenz** | | |
|---|---|---|---|---|---|---|---|---|---|---|---|---|---|---|---|
| | | **O** | **Z** | **P** | **O** | **CCE** | **Z** | **P** | **O** | **CCE** | **Z** | **P** | **O** | **Z** | **P** |
| **Bedingungen** | | | | | | | | | | | | | | | |
| Temperatur | °C | 110 | 50 | 80 | 110 | 30 | 50 | 70 | 110 | 30 | 50 | 70 | 110 | 50 | 80 |
| Verweilzeit | min | 60 | | 240 | 60 | 30 | | 120 | 60 | 30 | | 120 | 60 | | 300 |
| Stoffdichte | % | 12 | 10 | 10 | 12 | 10 | 10 | 10 | 12 | 10 | 10 | 10 | 12 | 10 | 10 |
| NaOH-Einsatz | kg/t | 25 | | 12 | 25 | | | 6 | 25 | | | 6 | 25 | | 9,3 |
| NaOH-Konzentration | g/l | | | | | 50 | | | | 100 | | | | | |
| O2-Partialdruck | bar | 10 | | | 10 | | | | 10 | | | | 10 | | |
| Ozoneinsatz | kg/t | | 11.87 | | | | 6,8 | | | | 3,5 | | | 2,8 | |
| Peroxideinsatz | kp/t | | | 10 | | | | 5 | | | | 5 | | | 6 |
| **Zellstoffparameter** | | | | | | | | | | | | | | | |
| Gesamtausbeute | %/Holz | 51,7 | 50,83 | **50,3** | 51,7 | 47,1 | 46,9 | **46,6** | 51,7 | 45,2 | 45,1 | **44,9** | 36,6 | 36,4 | **36,2** |
| Kappazahl | | 7,7 | 1,2 | **0,5** | 7,7 | 4,5 | 0,5 | **0,3** | 7,7 | 2,9 | 0,4 | **0,3** | 1,8 | 0,4 | **0,2** |
| Weissgrad | %ISO | 66,4 | 84 | **89,0** | 66,4 | | 90,2 | **92,5** | 66,4 | | 91,4 | **93,6** | 70,2 | 88,2 | **92,4** |
| Grenzviskosität | ml/g | 893 | 498 | **470** | 893 | 984 | 490 | **475** | 893 | 1026 | 490 | **465** | 650 | 490 | **455** |
| R18-20 | % | | | **93,1** | | 96,1 | | **96,4** | | 98,7 | | **97,8** | | | **97,0** |
| Xylan | % | | | **17,3** | | 9,6 | | **9,3** | | 4,7 | | **4,2** | | | **2,9** |

Aus Tabelle 2 geht klar hervor, dass die CCE-behandelten CBC*-Zellstoffe ein R18-Niveau aufweisen, das im Bereich hochveredelter Vorhydrolyse-Kraftzellstoffe (VISCBC-Referenz) liegt. Die Ausbeute dagegen liegt bei den gebleichten CBC*-CCE-Stoffen um 8.7-10.4%-Punkte höher als beim Referenzzellstoff.

Der Ausbeutevorteil ist überwiegend auf den höheren Cellulosegehalt zurückzuführen. Der höhere Xylangehalt (alkaliresistent) der CBC*-CCE-Zellstoffe trägt ebenfalls zur höheren Ausbeute bei, wobei dieser Anteil mit zunehmender NaOH-Konzentration in der CCE-Stufe abnimmt.

Eine einfache Bilanz zeigt, dass die CCE-Behandlung sehr selektiv die nicht-cellulosischen Polysaccharide entfernt, während eine intensive Vorhydrolyse auch einen massiven Celluloseabbau verursacht.

Ein wichtiges Kriterium für die Beurteilung von Chemiezellstoffen, speziell im Hinblick auf deren Weiterverarbeitungseigenschaften, ist die Molmassenverteilung.

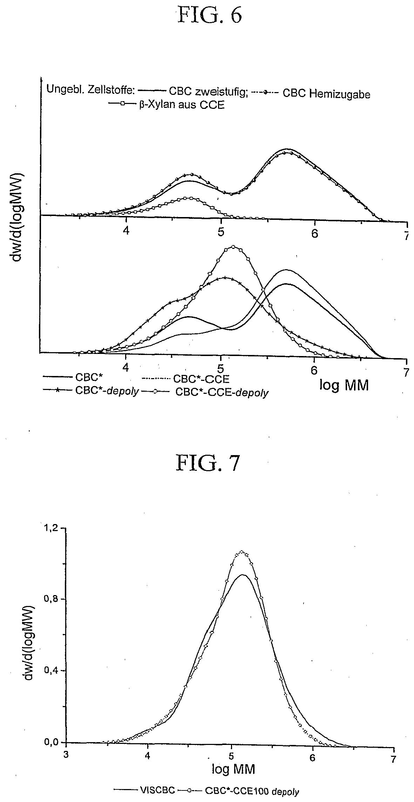

Die Molmassenverteilung von *Eucalyptus-globulus-*Kraftzellstoffen ist in der Figur 6 dargestellt.

Der obere Teil der Figur 6 zeigt ungebleichte CBC-Zellstoffe, welche nach einem zweistufigen CBC-Kochprozess hergestellt wurde. Dabei beziehen sich die Bezeichnungen "CBC-two-stage" "CBC hemi-add" auf die gemäß Beispiel 2 hergestellten Zellstoffe mit und ohne Hemicelluloseanreicherung. Die Kurve "β-Xylan" bezieht sich auf isoliert aus der CCE-Stufe isoliertes Xylan.
Der untere Teil der Figur 6 stellt folgende Zellstoffe dar:
(a) CBC*: ungebleichter CBC-Zellstoffnach Dampfaktivierung
(b) CBC*depoly: CBC* nach TCF-Bleiche
(c) CBC*-CCE: CBC* nach CCE-Behandlung bei 100 g/l NaOH Konzentration
(d) (c) TCF-gebleicht.

Die Molmassenverteilung wurde mittels GPC in LiCl/DMAc und MALLS Detektion [Schelosky, N., T. Röder, and T. Baldinger, Molecular mass distribution of cellulose products by size exclusion chromatography in DMAC/LiCl. Das Papier, 1999. 53(12): p. 728-738] ermittelt.

Aus dem unteren Teil der Figur 6 geht klar hervor, dass die CCE-Behandlung die niedermolekulare Kohlenhydratfraktion sehr effektiv und selektiv entfernt.

Ein Vergleich mit der Molmassenverteilung von konventionellen, hochveredelten Chemiezellstoffen, die gemäß eines Vorhydrolyse-Kraftprozess hergestellt wurden (VISCBC), zeigt (siehe Figur 7), dass die CCE-Behandlung mit dem höheren NaOH-Konzentrationsniveau eine engere Verteilung (geringere Polydispersität) als bei den Vergleichszellstoffen ermöglicht. In der Figur 7 wird ein VISCBC-Zellstoff mit einem "CBC* CCE100 Depoly" Zellstoff, als einem CBC*-Zellstoff, der ein CCE-Verfahren mit 100 g/l NaOH durchlaufen hat und einer Depolymerisations-Behandlung (TCF-Bleiche) unterzogen wurde, verglichen.

### Weiterverarbeitung zu Regeneratfasern

### 1. Viskosefasern:

Ein wichtiges Kriterium für die Weiterverarbeitung von Chemiezellstoffen ist die erzielbare Viskosequalität, die anhand des Filterwertes nach Treiber [Sixta, H., et al., Evaluation of new organosolv dissolving pulps. Part I: Preparation, analytical characterization and viscose processability. Cellulose, 2004. 11(1): p. 73-83.], des mittleren Partikelgehaltes und der Partikelverteilung im Größenbereich von 3-150 µm (Bestimmung mit Hilfe des PAMAS-Messgerätes [Sixta et al., Cellulose, 2004. 11(1): p. 73-83]) beurteilt wurde.

Die nachstehende Tabelle 3 zeigt, dass die Dampfaktivierungsbehandlung vor der CBC-Kochung den entscheidenden Schritt darstellt, um die resultierende Viskosequalität zu verbessern. Die nachfolgende CCE-Behandlung führt zu einer weiteren Verbesserung der Viskosequalität, wobei erwartungsgemäß der Effekt mit steigender NaOH-Konzentration zunimmt.

**Tabelle 3: Viskosequalität, gemessen anhand des Filterwertes und des mittleren Partikelvolumens von Referenz- und Versuchszellstoffen**

| **Zellstoffe** | **#** | **Filterwert** | **Partikelvolumen** ppm |
|---|---|---|---|
| VISCBC-Referenz | 73/05 | 364 | 28 |
| CBC-Referenz | 14/05 | 34 | 156 |
| CBC* | 74/05 | 180 | 58 |
| CBC*-CCE50 | 75/05 | 223 | 34 |
| CBC*-CCE100 | 15/05, 7/06 | 306 | 28 |

Tabelle 3 zeigt, dass die Qualität der Viskose, die aus dem CBC*-CCE100-Zellstoff hergestellt wurde nahezu gleichwertig mit derjenigen ist, die aus dem VISCBC-Referenzzellstoff hergestellt worden war. Die Viskosen wurden filtriert und an einer Laborspinnmaschine mit 20 Loch (φ 50 µm) bei insgesamt 4 verschiedenen Verstreckungsverhältnissen ausgesponnen.

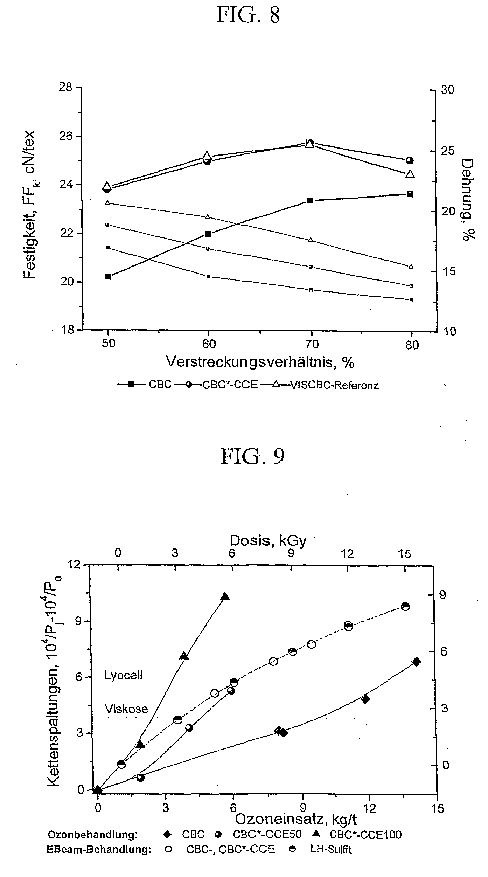

Die Festigkeiten der hergestellten Normal-Viskosefasern im konditionierten Zustand sind in Figur 8 zusammengefasst. Dabei werden Fasern aus
a) CBC-Papierzellstoff
b) CBC*-CCE-Zellstoff und einem
c) VISCBC-Referenzzellstoff
gegenübergestellt.

Die Ergebnisse belegen, dass der CBC*-CCE-Zellstoff dem Referenz-Chemiezellstoff (VISCBC), was die Weiterverarbeitung zu Viskosefasern betrifft, ebenbürtig ist. Die etwas geringeren Faserdehnungen sind auf eine unvollständigere Filtration zurückzuführen, die durch einen etwas erhöhten Anteil kleiner Partikel in der Größenordnung zwischen 5-10 µm erkennbar ist.

In der folgenden Tabelle sind die chemisch-physikalischen Eigenschaften der eingesetzten Zellstoffe und der daraus (nach einem Standardspinnverfahren) hergestellten Viskosefasern gegenübergestellt:

**Tabelle 4: Chemisch-physikalische Eigenschaften der Zellstoffe und der daraus hergestellten Viskosefasern (Standardqualität).**

| | | Erfindungsgemäß hergestellte Zellstoffe | | Referenz Solucell PHK |
|---|---|---|---|---|
| Parameter | Einheiten | Zellstoff 1 | Zellstoff 2 | |
| Typ | | CBC*-CCE100 | CBC*-CCE100 | |
| **Zellstoff** | | BI 269 | BI276 | FEZ 1167 |
| Holzart | | E. globulus | E. globulus | E. urograndis |
| Weissgrad | % ISO | 93,0 | 92,6 | 89,6 |
| Viskosität | ml/g | 441 | 411 | 421 |
| R18 | % | 98,1 | 98,4 | 97 |
| R10 | % | 96,5 | 96,8 | 93,35 |
| **Xylan** | **%** | **6,4** | **4,3** | **2,9** |
| **Mannan** | **%** | **0,4** | **0,5** | **0,0** |

| **ZS-Viskosefaser** | | | | |
|---|---|---|---|---|
| Xylan | % | 3,8 | 2,8 | 0,7 |
| Mannan | % | 0,3 | 0,2 | 0,0 |
| **Hemicellulose-Gesamt** | **%** | **4,1** | **3,0** | **0,7** |
| Titer | dtex | 1,3 | 1,3 | 1,3 |
| Tenacity (cond) | | | | |
| bei 50% Verstreckung | cN/tex | 23,8 | 24,3 | 23,9 |
| bei 60% Verstreckung | cN/tex | 25,0 | 25,6 | 25,2 |
| bei 70% Verstreckung | cN/tex | 25,8 | 25,7 | 25,7 |
| bei 80% Verstreckung | cN/tex | 25,1 | 25,1 | 24,5 |
| Elongation | | | | |
| bei 50% Verstreckung | % | 18,7 | 19,8 | 20,5 |
| bei 60% Verstreckung | % | 16,8 | 18,2 | 19,4 |
| bei 70% Verstreckung | % | 15,3 | 16,1 | 17,4 |
| bei 80% Verstreckung | % | 13,8 | 14,5 | 15,4 |
| **Mercerisierausbeute** | **%** | **94,8** | **96,7** | **n.d.** |

Der Zellstoff "Solucell" ist ein VISCBC-Zellstoff.

Unter dem Gehalt an Hemicellulose ist erfindungsgemäß die Summe der Nicht-Glucosehältigen Zuckerbestandteile (gerechnet als Anhydro-Zucker) nach einer Total-Hydrolyse (zweistufige Hydrolyse mit Schwefelsäure) des Zellstoffes bzw. der Faser zu verstehen. Die Messung erfolgt mittels Anionenaustauschchromatografie kombiniert mit gepulster Amperometrie als Detektionsmethode. Die Meßmethodik ist in U. Mais, H. Sixta, ACS Symposium Series 2004, 864, 94, sowie H. Sixta et. al. Proceedings of the 11th ISWPC 2001, Vol. 3, pp. 655-658, beschrieben.

### Methode zur Bestimmung der Mercerisierungsausbeute:

### Entavivierung:

Die Fasern werden 3h an einem Soxhlet-Extraktor mit 96%igem EtOH extrahiert und über Nacht bei 50°C unter Vakuum getrocknet.

### Mercerisierungsausbeute:

2,00 g entavivierte Faser (Einwaage M₁) wird bei 20 °C mit 50 mL NaOH, mit einer Konzentration von 250 g/L, in einem Becherglas 3 min lang mit einem Glasstab heftig gerührt (gestösselt). Anschließend wird der Faserbrei über eine G3-Fritte abgesaugt und mit VE-Wasser neutral gewaschen. Nach Trocknen der Faser wird die Faser erneut abgewogen (Auswaage M₂). Die Mercerisierungsausbeute ist der Quotient aus M₂/M₁ (%).

### 2. Lyocellfasern:

Es ist bekannt, dass depolymerisierter Kraft-Papierzellstoff zur Herstellung hochwertiger Lyocellfasern geeignet ist [WO 99/47733]. Eine (gegebenenfalls zweistufige) Kraftkochung mit Dampfvoraktivierung schafft die Basis zur Herstellung von Lyocellfasern mit deutlich besseren textilmechanischen Eigenschaften. Die Ergebnisse der Ausspinnungen in einer Davenport-Laborspinnanlage belegen, dass die Kaltalkaliextraktion von Kraftpapierzellstoffen die textilmechanischen Eigenschaften auf das Niveau der Lyocellfasern aus den hochwertigsten Chemiezellstoffen (VISCBC) anhebt (Tabelle 5).

**Tabelle 5: Festigkeitseigenschaften von Lyocellfasern, hergestellt mit Hilfe einer Davenport-Laborspinnanlage aus den CBC-Papier- und Chemiezellstoffen**

| | Konditionierte Faserdaten, 1.3 dtex | | |
|---|---|---|---|
| **Zellstoffe** | | **Festigkeit** | **Dehnung** |
| | **#** | cN/tex | % |
| VISCBC-Referenz | L66 | 40,7 | 12,7 |
| CBC-Referenz | L32 | 30,0 | 10,1 |
| CBC*-CCE50 | L53_54 | 36,0 | 12,5 |
| CBC*-CCE100 | L22 | 41,0 | 10,4 |

Die folgende Tabelle stellt das Ergebnis weiterer Versuche zur Herstellung von Lyocellfasern aus verschiedenen Zellstoffen zusammen:

**Tabelle 6: Chemisch-physikalische Eigenschaften der Zellstoffe und der daraus hergestellten Lyocellfasern**

| | | **Erfindungsgemäß hergestellte Zellstoffe** | | **Referenz** | |
|---|---|---|---|---|---|
| Parameter | Einheiten | Zellstoff 1 | Zellstoff 2 | High Hemi | Solucell |
| Typ | | CBC*-CCE100 | CBC*-CCE100 | Kraft | PHK |
| **Zellstoff** | | BI 269 | BL294 | ZF1761 | FEZ147/99 |
| Holzart | | E. globulus | Buche | Southern Pine | E. urograndis |
| Weissgrad | % ISO | 93,0 | 92,7 | 88,8 | 90,2 |
| Viskosität | ml/g | 441 | 350 | 451 | 415 |
| R18 | % | 98,1 | 97,3 | 86,9 | 96,9 |
| R10 | % | 96,5 | 95,1 | 82,9 | |
| Xylan | % | 6,4 | 4,7 | 8,5 | 3,3 |
| Mannan | % | 0,4 | 0,2 | 5,6 | 0,0 |
| **Hemicellulose-Gesamt** | | **6,8** | **4,9** | **14,1** | **3,3** |
| | | | | | |
| **Lyocellfaser** | | Labor | Technikum | Pilot | Labor |
| Xylan | % | n.d. | 4,1 | 7,8 | 3,1 |
| Mannan | % | n.d. | 0,2 | 5,3 | 0,0 |
| **Hemicellulose-Gesamt** | | | **4,3** | **13,1** | **2,9** |
| **Fasereigenschaften** | | | | | |
| Titer | dtex | 1,3 | 1,3 | 1,3 | 1,3 |
| Tenacity (cond) | cN/tex | 41,0 | 39,7 | 31,7 | 42,7 |
| Elongation | % | 10,4 | 11,8 | 11,7 | 12,7 |
| **Mercerisierausbeute** | % | n.d. | **95,2** | **86,7** | **96,4** |

Der Zellstoff "High Hemi" ist ein der Lehre der WO 99/47733 entsprechender Zellstoff. Der Zellstoff "Solucell" ist ein VISCBC-Zellstoff.

Aus der Tabelle ist ersichtlich, dass die aus erfindungsgemäß hergestellten Zellstoffen (CBC*-CCE100) ersponnenen Lyocellfasern trotz günstiger Herstellung des Zellstoffes und höherem Hemicellulosegehalt hinsichtlich der Faserfestigkeit und der Mercerisierausbeute hervorragende, mit Lyocellfasern aus einem hochwertigen VISCBC-Zellstoff vergleichbare Eigenschaften aufweisen.

Die erfindungsgemäßen Lyocellfasern übertreffen die Eigenschaften von aus einem der Lehre der WO 99/47733 entsprechenden Zellstoff hergestellten Fasern deutlich.

### Beispiel 4 - Kontrollierte DP-Einstellung von Hochausbeute-Chemiezellstoffen

In Laborversuchen wurde das Verhalten der Ozonbleiche und der Elektronenbestrahlung ("EBeam") in Bezug auf den DP-Abbau von OP-(CCE)-A- bzw. OP-(CCE)-D vorgebleichten CBC-, CBC*-CCE50- und CBC*-CCE100-Zellstoffen miteinander verglichen. Zum Vergleich wurde auch ein Laubholz-Sulfit-Zellstoff ("LH-Sulfit") elektronenbestrahlt.

Die Ozonbleiche wurde dabei bei jeweils 10% Stoffdichte und pH 2.0 durch Mischung in einem high-shear Mischer unter fluidisierenden Bedingungen durchgeführt.

Die EBeam-Behandlung erfolgte bei 10 MeV-Beschleunigungsspannung durch die Firma IBA SA, Louvain-La-Neuve in einem Rhodotron Accelerator nach Trocknung der Zellstoffblätter.

Sämtliche Zellstoffe wurden nach der Z- bzw. EBeam-Behandlung peroxidgebleicht (70 °C, 10 kg NaOH/t, 7 kg H2O2/t, 120 min, 10% Stoffdichte, 0.5 kg Mg II-Ionen/t).

Die Ergebnisse in Figur 9 zeigen, dass das Ausmaß der Kettenspaltungen (KSP, berechnet gemäß gemäß der Formel 10⁴/Pⱼ-10⁴/P₀ (P ≅ DPv berechnet aus SCAN GVZ-Werten; ⱼ... nach Abbau, ₀... vor Abbau)) als Funktion der Ozoneinsatzmenge sehr stark von der Konzentration an Hemicellulosen (und auch Lignin, nicht gezeigt) im Zellstoff abhängt. Je höher der Hemicellulosengehalt, desto höher der Ozoneinsatz zur Erreichung einer bestimmten KSP.

Der hemicellulosenarme CBC-CCE100-Zellstoff benötigt nur ca. 3 kg O₃/t für eine KSP von 5.6 (GVZ-Abbau von 750 ml/g auf 420 ml/g), während ein CBC-Zellstoff mit einem viermal so hohen Xylangehalt (siehe Tabelle 2) für dieselbe Abbauleistung mehr als 12 kg O₃/t benötigt.

Anders dagegen die Elektronenbestrahlung: Die erforderliche Dosis für einen bestimmten DP-Abbau ist hier weitgehend unabhängig von der Zellstoffart und Zellstoffzusammensetzung.

Die Tabelle 7 bestätigt anhand der Kupferzahl- und Carboxylgruppengehalte die stabilisierende Wirkung einer den Abbauprozessen nachfolgenden alkalischen Peroxidbehandlung. Die P-Stufe bewirkt nach beiden Abbauprozessen eine zusätzliche KSP von ca. 0.6 - 1.2, abhängig von den jeweiligen Bedingungen.

**Tabelle 7: Kupferzahl und Carboxylgruppengehalt von CBC*-CCE100-Zellstoffen nach Z-, EBeam-, bzw. nachfolgender alkalischer Peroxidbleiche**

| **OP-CCE100-A-Z-P** | | **Z** | **P** |
|---|---|---|---|
| Kupferzahl | % | 0,85 | 0,72 |
| COOH | mmol/kg | 34 | 37 |

| **OP-CCE100-D-Ebeam-P** | | **Ebeam** | **P** |
|---|---|---|---|
| Kupferzahl | % | 0,79 | 0,65 |
| COOH | mmol/kg | 33 | 40 |

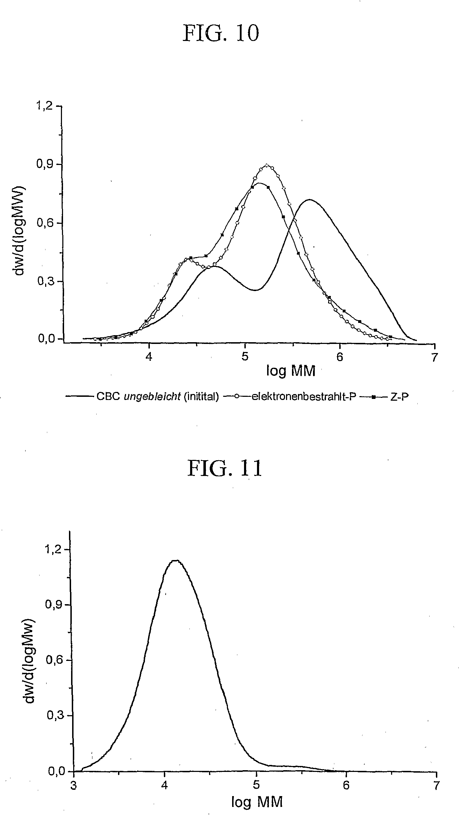

Der Vorteil der Elektronenbestrahlung manifestiert sich in der eindeutig engeren DP-Verteilung der Fertigzellstoffe. Figur 10 zeigt, dass der mittels EBeam depolymerisierte CBC-Papierzellstoff eine deutlich engere Verteilung als ein mit Ozon abgebauter CBC-Zellstoff aufweist. Bei einem Abbau auf eine GVZ von 440 ml/g betrug der Polydispersitätsindex (PDI) im Falle des Z-behandelten Zellstoffes 4.3, im Falle des EBeambehandelten Zellstoffes nur 3.5. Die Analyse erfolgte jeweils am Fertigzellstoff nach einer finalen P-Stufe.

### Beispiel 5 - Herstellung von Hochausbeute-Papierzellstoff

Der Einsatz hemicellulosereicher Kochlauge in der zweiten Kochstufe bewirkt in erster Linie eine Erhöhung der Zellstoffausbeute. Wie unter Beispiel 2 ausgeführt, beträgt der mittlere Ausbeutezuwachs (bei einer Hemikonzentration von ca. 10 g/l in der Kochlauge) ca. 2%-Punkte im Vergleich zur einstufigen Variante über einen weiten Kappazahlbereich (siehe Figur 4).

Die Repräzipitation von Xylan an der Zellstoffoberfläche ist deutlich als Anstieg der niedermolekularen Fraktion in der Molmassenverteilung, siehe Figur 6 oben, erkennbar und beeinflusst sowohl die Oberflächeneigenschaften als auch die mechanischen Festigkeiten.

Der hohe Uronsäureanteil (GlcA) der Xylane (Xyl), GlcA:Xyl-Verhältnis ca. 0.05:1, bewirkt eine Erhöhung der Hydrophilie der Zellstoffoberfläche.

### Beispiel 6 - Herstellung von Xylanprodukten

### 1. Isolierung von Xylan aus dem CCE-Filtrat

Mit Hilfe einer Pilot-Nanofiltrationsanlage (NF), ausgestattet mit einer Polyethersulfonmembran, Nadir N30 F, cut-off 300, wurde ein CCE-Filtrat mit Hilfe eines Kerzenfilters (Profile Star AB1A4007J) vorfiltriert, um restliche Fasern und ungelösten Partikel abzufiltrieren.

Die NF-Anlage wurde bei einer Temperatur von 40 °C, einem Druck von 25 bar und einer spezifischen Flussrate von 5 l/m².h betrieben. Die Beta-Cellulose (Xylan-)konzentration im Feed betrug ca. 15 g/l, die NaOH-Konzentration 90 g/l. Im Gleichgewicht verhielten sich die Mengenströme und damit auch die Laugenfrachten im Permeat- zu Retentat wie 0.82:0.18.

Aufgrund des niedrigen cut-offs der Membran befand sich die gesamte Beta-Cellulosemenge im Retentat in einer Konzentration von ca. 85 g/l. Das Retentat wurde in einem Verhältnis von 1:1.5 mit Wasser verdünnt und abermals der NF zugeführt.

Die NF-Bedingungen der zweiten Stufe waren vergleichbar mit der der ersten Stufe, lediglich die Permeatmenge sank auf ca. 70% der Feedmenge. Im Retentat der zweiten NF-Stufe lag nun die Beta-Cellulose in einer Konzentration von ca. 115 g/l und einer NaOH-Konzentration von ca. 32 g/l vor (Hemilauge).

Dieses Substrat diente zur Isolierung der Beta-Cellulose (Xylan) durch umgekehrte Fällung mit Mineralsäure. Dazu wurden ca. 0.1 Teile einer 1:3 mit Wasser verdünnten Schwefelsäure mit 1 Teil Hemilauge versetzt, wobei sich am Ende ein pH zwischen 4 und 5 einstellt.

Nach ca. 6-8 h bildet sich ein schmutzig-weißer Niederschlag in einer Konsistenz von ca. 10-15 Gew%. Dieser Niederschlag wurde dann zentrifugiert, gewaschen und getrocknet. In diesem Feststoff wurde ein Xylangehalt von 74 Gew% nachgewiesen. Bezogen auf den gesamten Kohlenhydratgehalt betrug der Xylangehalt 97.5%. Die mittels GPC ermittelte Molmassenverteilung dieses Xylanpulvers zeigt eine massengemittelte Molmasse von 24.4 kg/mol und eine zahlengemittelte Molmasse von 10.6 kg/mol (siehe Figur 11).

### 2. Weiterverarbeitung des Xylanpulvers zu Xylo-Oligosacchariden (XOS)

### XOS wurde auf zwei Arten aus dem Xylan hergestellt, (A) hydrothermolytisch, (B) enzymatisch:

### (A) Hydrothermolytische XOS-Herstellung:

318 g trockenes Xylan wurden in 9.08 L Wasser verdünnt (Xylankonzentration 35 g/L) und in einem 11 L-Druckreaktor bei 120°C 5 h lang unter ständiger Umwälzung behandelt. Die Umwälzrate betrug 75 L/h. Der pH Wert des Hydrolysates betrug nach Abschluss der Reaktion 3.13.

Die Lösung wurde anschließend mit 0.3 N NaOH auf pH 6.5-7.0 neutralisiert. Die wasserlöslichen Produkte wurden bei 4000 U/min für 60 min abzentrifugiert. Die isolierte Menge an XOS betrug 189.7 g gefriergetrocknetes Pulver, entsprechend einer Ausbeute von 59.6% bezogen auf das eingesetzte Xylan. Die hydrothermolytisch hergestellte XOS-Mischung zeigt eine relativ gleichmäßige Zusammensetzung über den untersuchten DP-Bereich (siehe unten Tabelle 8).

### (B) Enzymatische Hydrolyse:

### XOS₂₋₁₀

90 g feuchtes Xylan (entspricht 40 g trockenem Xylan) wurden in 900 mL Wasser suspendiert (44.4 g/L) und 50 mg Pentopan Mono BG (1.25 mg/g Xylan) zudosiert. Die Mischung wurde im Fermenter bei 50°C für 2 h gerührt. Danach wurde das Enzym durch 10-minütiges Erhitzen auf 99 °C deaktiviert. Die verbliebenen unlöslichen Anteile wurden abzentrifugiert, die wässrige Lösung gefriergetrocknet. Die XOS-Ausbeute bezogen auf das eingesetzte Xylan betrug 75%.

### XOS₂

Die Reaktion wurde in einem 7L-Fermentor mit 6 L Füllung durchgeführt, die XylanKonzentration betrug 20 g/L (120 g Xylan). Die Herstellung erfolgte gleichfalls mit dem Enzym Pentopan Mono BG, aber mit erhöhter Konzentration von 1 g/L (50 mg/g Xylan). Die Fermentation wurde bei 40 °C für 96 h durchgeführt. Die Aufarbeitung erfolgte wie oben beschrieben. Die XOS-Ausbeute betrug 78% bezogen auf die eingesetzte Xylanmenge (93.66 g XOS). Das Produkt besteht überwiegend aus Xylobiose (Tabelle 8).

**Tabelle 8: Relative Massenanteile der einzelnen, neutralen XOS**

| Produktverteilung | **Hydrothermal** | **Enzymatisch** | |
|---|---|---|---|
| | | **XOS₂₋₁₀** | **XOS₂** |
| | | Gew% | |
| X1 | 11,2 | 0,1 | 4,7 |
| X2 | 9,7 | 13,0 | 83,1 |
| X3 | 10,6 | 21,0 | 12,2 |
| X4 | 12,2 | 16,0 | |
| X5 | 12,5 | 11,0 | |
| X6 | 12,0 | 7,9 | |
| X7 | 12,6 | 7,2 | |
| X8 | 10,3 | 7,2 | |
| X9 | 9,0 | 6,9 | |
| X10 | | 9,7 | |
| **XOS** | 100,0 | 100,1 | 100,0 |

### Beispiel 7 - Molmassenverteilung (MMV) der Hemicellulosen (Xylane), isoliert aus erfindungsgemäß hergestellten Zellstoffen und Fasern

Der Einsatz der neuen Generation von Chemiezellstoffen der Kategorie "CBC*-CCE" zur Herstellung hochfester Lyocell-Textilfasern lässt sich anhand der Molmassenverteilung (MMV) der aus den Fasern isolierten Hemicellulosen (Im Falle von Laubhölzern sind dies nahezu ausschließlich Xylane) in Kombination mit den hohen Festigkeiten und der hohen Mercerisierausbeute eindeutig nachweisen.

Die Hemicellulosen werden mit Hilfe von DMSO gemäß der Methode von D. Evtuguin et.al. (Carboh. Res. 338 (2003) 597) aus den Substraten (Zellstoff, bzw. Fasern) extrahiert und gereinigt. Fasern werden zuvor noch mit EtOH entaviviert (25 g Soxhlet mit 1 L EtOH, 6h). Das isolierte Xylan (5 mg) wird in DMAc (1 mL) suspendiert und durch Zugabe von LiCl (8 mg) bei Raumtemperatur molekulardispers gelöst. Die Molmassenverteilung wird mittels GPC unter folgenden Bedingungen bestimmt: Laufmittel: LiCl/DMAc; Temperatur:
Raumtemperatur; Trennsäule: Mixed A von Polymer Labs; Detektion: MALLS (Wyatt) / RI; Brechungsindexinkrement: 0.136 mL/g.

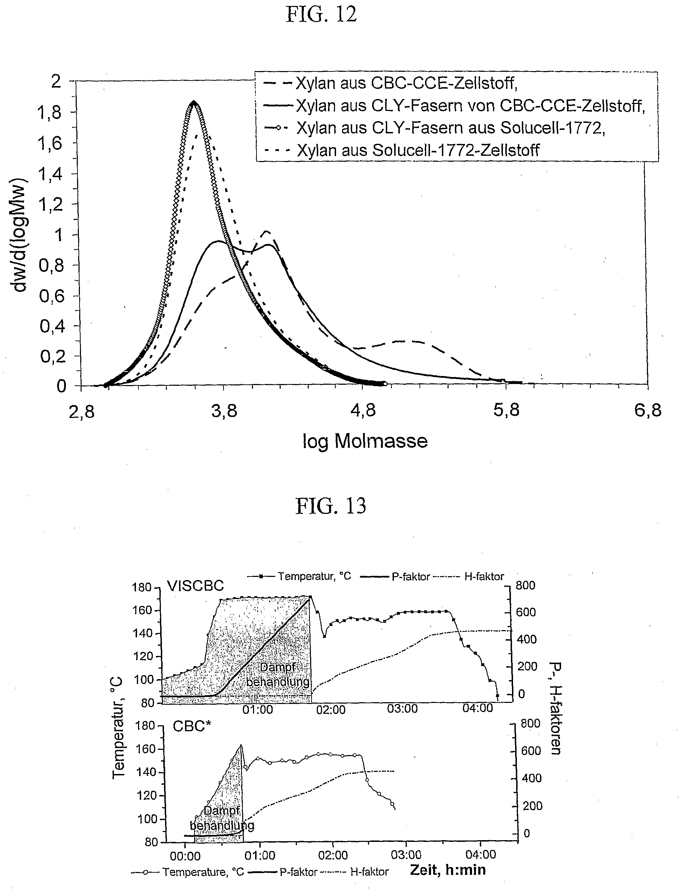

Die Ergebnisse der MMV-Bestimmung der aus Zellstoffen und daraus hergestellten Lyocell-Fasern isolierten Hemicellulosen sind in Tabelle 9 und Abbildung 12 zusammengefasst.

**Tabelle 9: MMV der mittels DMSO aus Zellstoffen und daraus hergestellten Lyocell-Fasern isolierten Xylane: numerische Auswertung der Massen- und Zahlenmittel**

| | | | |
|---|---|---|---|
| | | Erfindungsgemäß hergestellter Zellstoff | Konvention. Zellstoff Solucell |
| Parameter | Einheiten | | |
| Typ | | CBC*-CCE100 | PHK |
| **Zellstoff** | | BL294 | ZFAT1772 |
| Holzart | | Buche | E. urograndis |
| Xylan | % | 4,7 | 2,8 |
| DMSO-Xylanextrakt | | | |
| Mw (GPC: LiCl/DMac) | g/MoL | 44.750 | 7.900 |
| Mn (GPC: LiCl/DMAc) | g/MoL | 9.800 | 5.100 |
| PDI (Mw/Mn) | | 4,6 | 1,5 |
| **Lyocellfaser** | | Technikum | Produktion |
| Xylan | % | 4,1 | 2,9 |
| DMSO-Xylanextrakt | | | |
| Mw (GPC: LiCl/DMac) | g/MoL | 24.700 | 7.200 |
| Mn (GPC: LiCl/DMAc) | g/MoL | 7.850 | 4.500 |
| PDI (Mw/Mn) | | 3,1 | 1,6 |

Der Zellstoff "Solucell-1772" ist ein VISCBC-Zellstoff.

Die Ergebnisse der GPC-Messungen der aus Zellstoff und Fasern isolierten Xylane lassen folgende Schlussfolgerungen zu:
- Das Profil der Xylan-MMV im Zellstoff spiegelt sich - trotz Abbaus - in der Faser wieder.
- Xylane aus CBC*-CCE-Zellstoffen sind wesentlich hochmolekularer und polydisperser als jene aus konventionellen Vorhydrolyse-Kraft-Zellstoffen (PHK).
- Xylane aus Lyocell-Fasern, die durch Einsatz eines CBC*-CCE-Zellstoffes hergestellt wurden, weisen ein Massenmittel (Mw) von ≥ 20 kDa auf. Dagegen weisen Xylane aus Lyocell-Fasern, die aus heute kommerziellen PHK-Zellstoffen (oder auch Sulfitzellstoffen) stammen, ein Massenmittel (Mw) von ≤ 10 kDa auf.

## Patentansprüche

1. Verfahren zur Herstellung eines Chemiezellstoffes aus einem cellulosischen Ausgangsmaterial mittels des Kraft-Verfahrens, umfassend den Schritt des Kochens des Ausgangsmaterials mit einer Kochlauge, **dadurch gekennzeichnet, dass** das Ausgangsmaterial vor der Kochung einer Dampfbehandlung ausgesetzt wird und dass der durch die Kochung erhaltene Zellstoff im Zuge der Weiterbehandlung einer Kalt-Alkali-Extraktion (CCE) unterworfen wird, wobei die Dampfbehandlung bei einer Temperatur von 120°C oder mehr und einem P-Faktor von 50 oder weniger durchgeführt wird, wobei für die Berechnung des P-Faktors eine Aktivierungsenergie von 123 kJ/mol eingesetzt wird.

2. Verfahren gemäß Anspruch 1, **dadurch gekennzeichnet, dass** zur Dampfbehandlung das Ausgangsmaterial bei einer Temperatur von 150 bis 180°C mit Mitteldruckdampf behandelt wird.

3. Verfahren gemäß einem der vorhergehenden Ansprüche, **dadurch gekennzeichnet, dass** das Ausgangsmaterial vor der Kochung einer Imprägnierung unterzogen wird.

4. Verfahren gemäß einem der vorhergehenden Ansprüche, **dadurch gekennzeichnet, dass** die Kochung, die Dampfbehandlung und gegebenenfalls die Imprägnierung des Ausgangsmaterials in demselben Kocher durchgeführt werden.

5. Verfahren gemäß einem der vorhergehenden Ansprüche, **dadurch gekennzeichnet, dass** die Kochung in Form einer kontinuierlichen Batch-Kochung (CBC) durchgeführt wird.

6. Verfahren gemäß einem der vorhergehenden Ansprüche, **dadurch gekennzeichnet, dass** zumindest ein Teil der in der Kalt-Alkali-Extraktionsstufe entstehenden Presslauge mittels eines Membrantrennverfahrens, vorzugsweise einer Nano- oder einer Ultrafiltration gereinigt wird.

7. Verfahren gemäß einem der vorhergehenden Ansprüche, **dadurch gekennzeichnet, dass** es mit einem Verfahren zur Herstellung eines Papierzellstoffes gekoppelt ist und zumindest ein Teil der in der Kalt-Alkali-Extraktionsstufe entstehenden Presslauge und/oder zumindest ein Teil des Retentates eines an der Presslauge durchgeführten Membrantrennverfahrens der Kochlauge eines zur Herstellung von Papierzellstoff durchgeführten Kochverfahrens zugeführt wird.

8. Verfahren gemäß einem der vorhergehenden Ansprüche, **dadurch gekennzeichnet, dass** an dem durch die Kochung erhaltenen Zellstoff im Zuge der Weiterbehandlung zusätzlich zu einem allfällig durchgeführten Bleicheschritt eine Behandlung zur Einstellung des Polymerisationsgrades (DP) durchgeführt wird.

9. Verfahren gemäß einem der vorhergehenden Ansprüche, **dadurch gekennzeichnet, dass** der Kochungsschritt des Zellstoffes in zwei Stufen durchgeführt wird, wobei in der ersten Stufe eine Delignifizierung mittels einer ersten Kochlauge auf eine Kappazahl von 35 bis 70 im Fall von Nadelhölzern als Ausgangsmaterial und auf eine Kappazahl von 30 bis 60 im Fall von Laubhölzern als Ausgangsmaterial durchgeführt wird, und in der zweiten Stufe mittels einer zweiten Kochlauge die Kochung bis zum gewünschten Reinheitsgrad des Zellstoffes weitergeführt wird.

10. Verwendung eines Chemiezellstoffes, der nach einem Verfahren gemäß einem der Ansprüche 1 bis 9 hergestellt wurde, zur Herstellung von Viskose- und Lyocellfasern.

11. Lyocellfaser, erhältlich durch das Verspinnen eines Chemiezellstoffes, der nach einem Verfahren gemäß einem der Ansprüche 1 bis 9 hergestellt wurde.

12. Lyocellfaser gemäß Anspruch 11, **dadurch gekennzeichnet, dass** ihr Gehalt H an Hemicellulose mehr als 3,5 Gew.% beträgt und ihre Mercerisierausbeute bei 90% oder mehr liegt.

13. Lyocellfaser gemäß Anspruch 12, **dadurch gekennzeichnet, dass** der Gehalt H weniger als 5 Gew.% beträgt.

14. Lyocellfaser gemäß Anspruch 12 oder 13, **dadurch gekennzeichnet, dass** ihre Festigkeit in konditioniertem Zustand 37 cN/tex oder mehr beträgt.

15. Lyocellfaser gemäß einem der Ansprüche 12 bis 14, **dadurch gekennzeichnet, dass** die mittlere Molmasse der aus der Faser isolierbaren Xylane 20 kDa oder mehr beträgt.

16. Viskosefaser, erhältlich durch das Verspinnen eines Chemiezellstoffes, der nach einem Verfahren gemäß einem der Ansprüche 1 bis 9 hergestellt wurde.

17. Viskosefaser gemäß Anspruch 16, **dadurch gekennzeichnet, dass** ihr Gehalt H an Hemicellulose mehr als 2,0 Gew.% beträgt und ihre Mercerisierausbeute bei 90% oder mehr liegt.

18. Viskosefaser gemäß Anspruch 16 oder 17, **dadurch gekennzeichnet, dass** ihre Festigkeit in konditioniertem Zustand 23 cN/tex oder mehr und ihre Dehnung in konditioniertem Zustand 18% oder mehr beträgt.

## Claims

1. A process for producing a dissolving pulp from a cellulosic starting material using the kraft process, comprising the step of cooking the starting material with a cooking liquor, **characterized in that** the starting material is exposed to a steam treatment prior to cooking and that the pulp obtained by cooking is subjected to cold caustic extraction (CCE) in the course of further processing, wherein the steam treatment is carried out at a temperature of 120°C or more and a P-factor of 50 or less, with an activation energy of 123 kJ/mol being used for the calculation of the P-factor.

2. A process according to claim 1, **characterized in that**, for the steam treatment, the starting material is treated with medium-pressure steam at a temperature of from 150 to 180°C.

3. A process according to any of the preceding claims, **characterized in that** the starting material is subjected to an impregnation prior to cooking.

4. A process according to any of the preceding claims, **characterized in that** the cooking, the steam treatment and optionally the impregnation of the starting material are carried out in the same cooker.

5. A process according to any of the preceding claims, **characterized in that** cooking is carried out in the form of continuous batch cooking (CBC).

6. A process according to any of the preceding claims, **characterized in that** at least a portion of the press liquor forming in the cold caustic extraction stage is purified using a membrane separation process, preferably nano- or ultrafiltration.

7. A process according to any of the preceding claims, **characterized in that** it is linked to a process for producing a paper pulp and at least a portion of the press liquor forming in the cold caustic extraction stage and/or at least a portion of the retentate of a membrane separation process performed on the press liquor is/are supplied to the cooking liquor of a cooking process carried out for the production of paper pulp.

8. A process according to any of the preceding claims, **characterized in that** the pulp obtained by cooking in the course of further processing, in addition to a bleaching step which has optionally been carried out, is subjected to a treatment for adjusting the degree of polymerization (DP).

9. A process according to any of the preceding claims, **characterized in that** the cooking step of the pulp is carried out in two stages, wherein, in the first stage, a delignification using a first cooking liquor to a kappa number of from 35 to 70 in case of softwoods as the starting material and to a kappa number of from 30 to 60 in case of hardwoods as the starting material is carried out and, in the second stage, the cooking is continued to the desired degree of purity of the pulp, using a second cooking liquor.

10. The use of a dissolving pulp produced according to a process according to any of claims 1 to 9 for the production of Viscose and Lyocell fibres.

11. A Lyocell fibre obtainable by the spinning of a dissolving pulp produced according to a process according to any of claims 1 to 9.

12. A Lyocell fibre according to claim 11, **characterized in that** its content H of hemicellulose amounts to more than 3.5% by weight and its yield of mercerization is 90% or more.

13. A Lyocell fibre according to claim 12, **characterized in that** the content H amounts to less than 5% by weight.

14. A Lyocell fibre according to claim 12 or 13, **characterized in that** its strength amounts to 37 cN/tex or more in the conditioned state.

15. A Lyocell fibre according to any of claims 12 to 14, **characterized in that** the average molar mass of the xylans isolable from the fibre amounts to 20 kDa or more.

16. A Viscose fibre obtainable by the spinning of a dissolving pulp produced according to a process according to any of claims 1 to 9.

17. A Viscose fibre according to claim 16, **characterized in that** its content H of hemicellulose amounts to more than 2.0% by weight and its yield of mercerization is 90% or more.

18. A Viscose fibre according to claim 16 or 17, **characterized in that** its strength amounts to 23 cN/tex or more in the conditioned state and its elongation amounts to 18% or more in the conditioned state.

## Revendications

1. Procédé de fabrication d'une pâte de cellulose chimique à partir d'un matériau de départ cellulosique au moyen du procédé kraft, comprenant l'étape de lessivage du matériau de départ avec une lessive de cuisson, **caractérisé en ce que** le matériau de départ est exposé avant le lessivage à un traitement à la vapeur d'eau et la cellulose obtenue par le lessivage est soumise, dans le cadre du traitement ultérieur, à une extraction alcaline à froid, dans lequel le traitement à la vapeur d'eau est réalisé à une température de 120 °C ou plus et un facteur P de 50 ou moins, en utilisant pour le calcul du facteur P une énergie d'activation de 123 kJ/mol.

2. Procédé selon la revendication 1, **caractérisé en ce que,** pour le traitement à la vapeur d'eau, le matériau de départ est traité à une température de 150 à 180 °C avec de la vapeur d'eau à pression moyenne.

3. Procédé selon l'une quelconque des revendications précédentes, **caractérisé en ce que** le matériau de départ est soumis à une imprégnation avant le lessivage.

4. Procédé selon l'une quelconque des revendications précédentes, **caractérisé en ce que** le lessivage, le traitement à la vapeur d'eau et éventuellement l'imprégnation du matériau de départ sont effectués dans le même lessiveur.

5. Procédé selon l'une quelconque des revendications précédentes, **caractérisé en ce que** le lessivage est réalisé sous la forme d'un lessivage batch continu (CBC).

6. Procédé selon l'une quelconque des revendications précédentes, **caractérisé en ce qu**'au moins une partie de la lessive de pressage formée lors de l'étape d'extraction alcaline à froid est épurée à l'aide d'un procédé de séparation à membrane, de préférence une nano-ou une ultrafiltration.

7. Procédé selon l'une quelconque des revendications précédentes, **caractérisé en ce qu**'il est couplé à un procédé de fabrication d'une cellulose papetière et au moins une partie de la lessive de pressage formée à l'étape d'extraction alcaline à froid et/ou au moins une partie du rétentat d'un procédé de séparation par membrane réalisé sur la lessive de pressage est ou sont acheminées à la lessive de cuisson d'un procédé de lessivage réalisé pour la fabrication de cellulose papetière.

8. Procédé selon l'une quelconque des revendications précédentes, **caractérisé en ce que,** dans la cellulose obtenue par la cuisson, dans le cadre du traitement ultérieur, on réalise en plus d'une étape de blanchiment effectuée éventuellement un traitement de réglage du degré de polymérisation (DP).

9. Procédé selon l'une quelconque des revendications précédentes, **caractérisé en ce que** l'étape de lessivage de la cellulose est réalisée en deux étapes, dans lequel, dans la première étape, une délignification est réalisée au moyen d'une première lessive de cuisson à un indice kappa de 35 à 70 dans le cas de bois de résineux comme matériau de départ et un indice kappa de 30 à 60 dans le cas de feuillus comme matériau de départ et, dans la seconde étape, le lessivage est réalisé au moyen d'une seconde lessive de cuisson jusqu'au degré de pureté souhaité de la cellulose.

10. Utilisation d'une cellulose chimique qui a été fabriquée par un procédé selon l'une des revendications 1 à 9, pour la fabrication de fibres de viscose et de lyocell.

11. Fibres de lyocell obtenues par filage d'une cellulose chimique qui a été fabriquée par un procédé selon l'une quelconque des revendications 1 à 9.

12. Fibres de lyocell selon la revendication 11, **caractérisées en ce que** leur teneur H en hémicellulose atteint plus de 3,5 % en poids et leur rendement de mercerisage se situe à 90 % ou plus.

13. Fibres de lyocell selon la revendication 12, **caractérisées en ce que** la teneur H atteint moins de 5 % en poids.

14. Fibres de lyocell selon la revendication 12 ou 13, **caractérisées en ce que** leur résistance à l'état conditionné atteint 37 cN/tex ou plus.

15. Fibres de lyocell selon l'une quelconque des revendications 12 à 14, **caractérisées en ce que** la masse molaire moyenne des xylanes isolables des fibres atteint 20 kDa ou plus.

16. Fibres de viscose obtenues par filage d'une cellulose chimique qui a été obtenue par un procédé selon l'une quelconque des revendications 1 à 9.

17. Fibres de viscose selon la revendication 16, **caractérisées en ce que** leur teneur H en hémicellulose atteint plus de 2,0 % en poids et leur rendement de mercerisage se situe à 90 % ou plus.

18. Fibres de viscose selon la revendication 16 ou 17, **caractérisées en ce que** leur résistance à l'état conditionné atteint 23 cN/tex ou plus et leur allongement à l'état conditionné atteint 18 % ou plus.
